# EUROPÄISCHE PATENTSCHRIFT

(11) **EP 0 658 949 B1**
(45) Veröffentlichungstag und Bekanntmachung des Hinweises auf die Patenterteilung: **10.09.1997**
(21) Anmeldenummer: 94116622.5
(22) Anmeldetag: 21.10.1994
(51) Int. Cl.: H01M 10/34, H01M 4/80

(54) **Gasdicht verschlossener alkalischer Akkumulator in Form einer Knopfzelle**
Gastight alkaline button-type accumulator
Accumulateur alcalin étanché du type bouton

(30) Priorität: 18.12.1993 DE 4343435
(43) Veröffentlichungstag der Anmeldung: 21.06.1995
(73) Patentinhaber: VARTA Batterie Aktiengesellschaft, 30419 Hannover (DE)
(72) Erfinder: Klaus, Christoph, D-65195 Wiesbaden (DE)
(74) Vertreter: Kaiser, Dieter Ralf, Dipl.-Ing.

(56) Entgegenhaltungen:
- EP-A- 0 460 425
- FR-A- 2 499 772
- GB-A- 2 254 478
- US-A- 3 108 908
- US-A- 4 251 603
- PATENT ABSTRACTS OF JAPAN vol. 4, no. 63 (E-010) 7. März 1980 & JP-A-55 032 344 (HITACHI MAXELL LTD)

## Beschreibung

Die Erfindung betrifft einen gasdicht verschlossenen alkalischen Akkumulator in Form einer Knopfzelle mit im Zellengehäuse angeordneten, durch einen Separator getrennten positiven und negativen Elektroden.

Das Gehäuse einer Knopfzelle wird von einem napfförmigen Unterteil und einem Deckel aus vernickeltem Stahlblech gebildet. Das Unterteil nimmt zunächst die positive Elektrode auf, dann folgt ein laugebeständiges Kunststoffmaterial als Separator; darauf liegt die negative Elektrode. Die Elektroden und der Separator sind mit Elektrolyt getränkt. Zwischen negativer Elektrode und dem Deckel liegt eine Feder, die einen engen Kontakt der Elektroden mit dem Zellgefäß herstellt. Der Zellennapf und der Deckel sind durch einen Kunststoffring gegeneinander isoliert. Durch Umbördeln und Festpressen des Napfrandes wird ein einwandfrei dichtender Verschluß erreicht.

Abgesehen von ihrer speziellen Bauart, die sie von Rundzellen unterscheidet, sind Knopfzellen stets für kleine Kapazitäten bis zu etwa 1Ah ausgelegt. Während ferner Rundzellen in der Regel mit dünnschichtigen, flexiblen Wickelelektroden bestückt sind, sind die typischen Knopfzellenelektroden aus einer Trockenmischung bestehende, zu Tabletten verpreßte Masse-Elektroden und so eng in die Zelle eingebaut, daß sie unter einem beständigen Flächendruck stehen.

Die Trockenmischung setzt sich aus pulverförmigem Aktivmaterial (Ni(OH)₂ im Fall der positiven Elektrode), Leitmittel wie Ni-Pulver sowie geringen Mengen eines Bindemittels zusammen. Zum Einstellen einer Entladereserve in der Zelle sind ferner Zusätze von metallischem Kobalt oder Kobaltoxid üblich. Die Tablettierung der Masse-Mischung geschieht in der Fertigung mittels Rundläuferpressen.

Die fertigen Tabletten bedürfen aber zusätzlich zu dem in der Masse bereits vorhandenen leitfähigen Material noch einer ebenfalls leitenden äußeren Armierung durch ein Körbchen aus Nickeldrahtgewebe. Nachdem sie in dieses eingelegt sind, muß das Körbchen mit einem Plättchen aus dem gleichen Drahtgewebe durch Einschlagen eines über die Tablette hinausstehenden Randes über dem Abdeckplättchen geschlossen werden. Dabei ist der abermalige Einsatz eines Preßstempels erforderlich. In einem zügigen Produktionsablauf sind solche Arbeitsschritte hinderlich.

Hinzukommt, daß Leitmittelzusätze wegen des schlecht leitenden aktiven Ni(OH)₂, z.B. Ni-Pulver, bis zu 30Gew.% der Massemischung ausmachen können und damit einen beträchtlichen Ballast von inertem Material darstellen. Für die notwendige Bildung einer dreidimensionalen Ableiterstruktur beim Pressen der Elektrode ist dieser Materialeinsatz jedoch unverzichtbar. Die Volumenkapazität der Elektrode wird dadurch deutlich begrenzt. Typischerweise werden höchstens 450 mAh/cm³ Elektrode erreicht.

Ein weiterer Nachteil verfahrenstechnischer Art besteht darin, daß bei der Elektrodenherstellung nur solche Mischungen eingesetzt werden können, die in einer Rundläuferpresse verarbeitbar sind. Dies setzt eine granulierfähige Masse voraus, die zugleich eine gewisse Schmierwirkung auf das Stempelwerkzeug ausübt und eine volumetrische Dosierung ermöglicht. Nicht jede Partikelverteilung und nicht jeder Binder ist dafür geeignet. Daraus ergibt sich eine geringe Flexibilität des Prozesses hinsichtlich Rezepturänderungen, Partikelgrößenänderungen und Variationen des Kunststoffbinderzusatzes.

Der Erfindung liegt die Aufgabe zugrunde, eine Knopfzelle auf der Grundlage des alkalischen NiCd-Systems oder des NiH-Systems mit vorzugsweise Wasserstoffspeicherlegierungen als negativen Elektroden verfügbar zu machen, die von den beschriebenen Mängeln weitmöglichst frei ist.

Die Aufgabe wird mittels einer Knopfzelle gelöst, wie sie im Anspruch 1 definiert ist.

Danach hat sich der Einsatz positiver pastierter Elektroden mit einem hochporösen Trägergerüst aus Metallschaum (Foam-Elektrode) bzw. aus einem Metallfilz oder Metallvlies (Felt-Elektrode) als sehr vorteilhaft erwiesen. Das zugrundeliegende Metall ist vorzugsweise Nickel.

Es gibt verschiedene Techniken zur Erzeugung eines Schaummetalls. Ausgangsmaterial ist meist ein verschäumter Kunststoff, z.B. Polyurethan, von schwammartiger, offenporiger Struktur. Dieser wird mit dem betreffenden Metall plattiert und das Metall zum Entfernen des Kunststoffes unter Inertgas geglüht. Hierbei wird der Kunststoff thermisch zersetzt und tritt durch Poren in der Nickeloberfläche in die Gasphase. Nach einem anderen Verfahren wird der "Kunststoff-Schwamm" mit Metallpulver gefüllt und das Ganze gesintert. Eine dritte Methode sieht vor, Metallpulver mit einem Porenbildner zu mischen, das Gemisch zu sintern oder zu schmelzen und verbliebene Reste des Porenbildners durch Ätzen zu entfernen.

Den Metallfilzen liegt ein Metallfasergespinst, meist durch Sintern vliesähnlich verfestigt, zugrunde. Sie lassen sich aber auch über Kunststoffvliese, die metallisiert und anschließend unter Inertgas erhitzt werden, gewinnen. Nach einem weiteren bekannten Verfahren wird Ni aus der Gasphase auf einem Kunststoffvlies abgeschieden. Derartige Vliese haben Porengrößen zwischen 100 und 1000µm.

Zur Herstellung erfindungsgemäßer positiver Elektroden für Knopfzellen wird z.B. ein Nickelschaum mit einer Porosität von 85 bis 97%, vorzugsweise 95%, und mit Porengrößen zwischen 50µm und 500µm, der als Band- oder Tafelmaterial erhältlich ist, auf eine definierte Dicke, z.B. auf 4 mm, vorverdichtet und in diese dreidimensionale Matrix in einem kontinuierlichen oder diskontinuierlichen Prozeß eine homogene wäßrige Paste aus Ni(OH)₂-Pulver mit verschiedenen Zusätzen eingebracht.

Die Vorverdichtung bezweckt eine exakte Einstellung des Flächengewichts über die Elektrodendicke innerhalb einer Toleranzbreite von ± 0,01mm.

Die Zusätze umfassen sowohl Bindemittel in fester, flüssiger oder dispergierter Form als auch Co-Pulver, CoO- oder Co(OH)₂-Pulver sowie im einen oder anderen Fall Verbindungen von Zn oder Cd. Ausgenommen sind jedoch die in Knopfzellenelektroden sonst üblichen Leitmittel.

Der auf der Substratoberfläche verbleibende Pastenüberschuß wird anschließend abgestreift und das Elektrodenband bei erhöhter Temperatur bis etwa 150°C in einem kontinuierlichen Durchzugsofen oder auch in Partien getrocknet.

Es folgt eine Verdichtung des getrockneten Bandes durch Walzen oder mit einer statischen Presse, um einen innigen Kontakt der einzelnen Pulverpartikel zu gewährleisten. Die Elektrodendicke wird so von 4 mm auf 2 mm verringert, derartige Elektroden können in Knopfzellen beispielsweise mit einem Durchmesser von 25,1 mm und einer Höhe von 6,7 mm (Baureihe 170 DK) eingebaut werden.

In einem letzten Konfektionierungsschritt werden aus dem Band kreisförmige, rechteckige oder auch hexagonale Einzelelektroden ausgestanzt, wobei das Stanzwerkzeug so ausgebildet ist, daß die Stanzverluste so gering wie möglich sind.

Die Vorteile der erfindungsgemäßen Elektrodenbestückung bei alkalischen Knopfzellen ergeben sich daraus, daß die Foam-Matrix im Gegensatz zur Masse-Elektrode keinerlei Zusätze von Leitmitteln wie Ni-Pulver erfordert. Deren Funktion wird von der dreidimensionalen Schwammstruktur des Trägers übernommen, die dabei nur ca. 5% vom gesamten Elektrodenvolumen in Anspruch nimmt. Bei Masseelektroden (Preßpulvertabletten) liegt der Volumenanteil des Leitmaterials zwischen 3 und 15%, und sein Gewichtsanteil kann bis zu 30% erreichen. In einem besonders günstigen Fall kann auf das Nickelkörbchen, welches als Ableiter die positive Elektrode umhüllt, ebenfalls verzichtet werden.

Als Konsequenz aus der besonders leichten günstigen Schwammstruktur des Schaummetallträgers ergeben sich für die erfindungsgemäßen Knopfzellenelektroden außerordentlich günstige spezifische Volumenkapazitäten von 500 bis 700 mAh/cm³, wobei optimal bis zu 800 mAh/cm³ erreichbar sind. Für Metallfilz-Elekroden (Felt-Elektroden) gilt das gleiche. Hingegen liegen die Kapazitäten bei den herkömmlichen Knopfzellenelektroden nur bei ca. 450 mAh/cm³.

In einer besonders vorteilhaften Ausführung der erfindungsgemäßen Knopfzelle kann die bis zu 90% höhere Kapazität der positiven Einzelelektrode durch eine negative Elektrode ebenfalls vom Foam-Typ ausgeglichen und mit dieser Elektrodenkombination eine Steigerung der Zellkapazität um etwa 40% erzielt werden. Dies ist allerdings nur bei der negativen Elektrode einer NiCd-Knopfzelle sinnvoll. Bei den intrinsisch leitfähigen negativen Legierungselektroden von NiH-Zellen erübrigt sich ein zusätzliches Leitgerüst.

Das Foam-Ableitergerüst ist auch mechanisch stabiler als die dreidimensionale Ableiterstruktur in einer Masse-Elektrode, die ihren Zusammenhalt dem jeweils herrschenden Preßdruck verdankt, auf die Dauer jedoch unter der Wirkung der im zyklischen Lade/Entladebetrieb auftretenden Volumenschübe des Nickelhydroxids merklich zerfällt. Die dadurch bei positiven Masse-Elektroden bei hohen Zyklenzahlen typischerweise sich einstellenden Abkoppelungen von Teilbereichen der aktiven Masse als Folge von Kontaktverlusten zwischen Partikeln der Ableiterstruktur sind bei den erfindungsgemäß in Knopfzellen zu verwendenden Foam-Elektroden nicht möglich.

Folglich weist die Foam-Elektrode im Vergleich zur Masse-Elektrode eine wesentlich höhere Zyklenstabilität auf, so daß bei 1-stündiger Ladung und Entladung über 1000 Zyklen erreicht werden können.

Zwei Figuren verdeutlichen die Erfindung.
- Figur 1: zeigt einen Knopfzellen-Akkumulator gemäß der Erfindung im Schnitt.
- Figur 2: zeigt das Kapazitäts- und Lebensdauerverhalten eines erfindungsgemäßen und eines konventionellen Knopfzellen-Akkumulators im Vergleich.

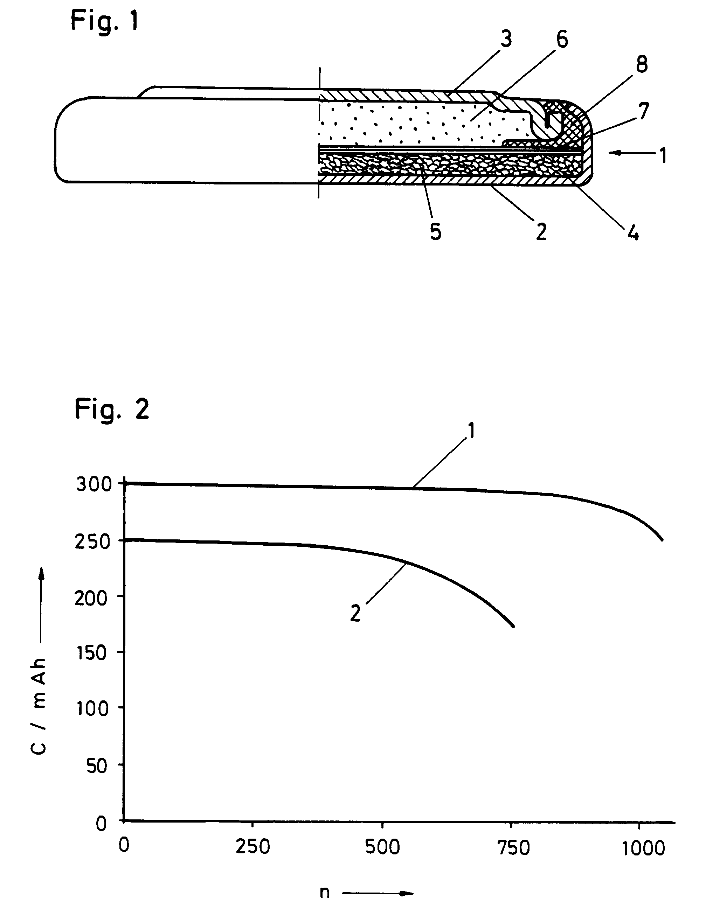

Nach Figur 1 wird das Gehäuse der Knopfzelle 1 von dem napfförmigen Unterteil 2 und dem Deckel 3 aus vernickeltem Stahlblech gebildet. Das napfförmige Unterteil enthält die positive Ni(OH)₂-Elektrode 4 mit erfindungsgemäßer Ableiter-Struktur aus einem offenporigen Nickelschaum 5, während das Deckelteil die negative Elektrode 6, je nach dem zugrundeliegenden elektrochemischen System beispielsweise aus Cd(OH)₂ oder vorzugsweise einer Wasserstoffspeicherlegierung, aufnimmt.

Die Elektroden sind durch den zwischenliegenden Kunststoffseparator 7 elektrisch voneinander isoliert und das Gehäuse durch Einbördeln des Napfrandes gegen den Deckelrand hermetisch verschlossen. Ein Kunststoffring 8 dient gleichzeitig als Dichtring und Isolierung des Napfes vom Deckel.

In Figur 2 sind für eine erfindungsgemäße Knopfzelle mit positiver Foam-Elektrode (Kurve 1) und eine konventionelle Knopfzelle (Kurve 2) deren Kapazitäten C in mAh über der Zyklenzahl n aufgetragen, wobei die Kurven jeweils Mittelwerte für eine Gruppe von mehreren Versuchszellen repräsentieren. In allen Fällen liegen NiH-Zellen vor. Jede Ladung erfolgte bei einer Ladedauer von 4h mit 100mA, jede Entladung ebenfalls mit 100 mA bis zur Entladeschlußspannung von 0,8 V.

Es zeigte sich, daß die Zellen mit positiven Foam-Elektroden den Zellen mit konventionellen positiven Masse-Elektroden sowohl kapazitätsmäßig als auch hinsichtlich des Lebensdauerverhaltens klar überlegen sind.

Schließlich erbringt die pastierte Foam-Elektrode im Vergleich zur Masse- bzw. Preßpulverelektrode verfahrenstechnische Vorteile, die darin liegen, daß zum einen hinsichtlich der Rezeptur für das Aktivmaterial keine Rücksicht auf eine mechanische Verarbeitbarkeit an einer Rundläuferpresse genommen werden muß. So ist die Morphologie und Partikelgrößenverteilung des eingesetzten Ni(OH)₂ wie auch der anderen pulverförmigen Zusätze frei wählbar. Bei den Kunststoffbindem kann vollkommen frei zwischen flüssigen, pulverförmigen und dispergierten Typen gewählt werden; auch die Konzentration dieser Binder ist in weiten Grenzen frei wählbar.

Zum anderen kann durch diese Flexibilität hinsichtlich der Einsatzstoffe die Kapazität, die Belastbarkeit und die Zyklenfestigkeit der Knopfzelle deutlich verbessert werden.

## Patentansprüche

1. Gasdicht verschlossener alkalischer NiCd- oder NiH-Akkumulator in Form einer Knopfzelle mit im Zellengehäuse angeordneten, durch einen Separator getrennten positiven und negativen Elektroden, bei dem die positive Elektrode ein Träger- und Ableitergerüst besitzt, welches aus einem porösen Metallschaum oder Metallfilz besteht und bei dem das im Träger- und Ableitergerüst eingebettete Aktivmaterial frei von Leitmittel-Zusätzen ist.

2. Akkumulator nach Anspruch 1, bei dem das dem Schaum oder Filz zugrundeliegende Metall Nickel ist.

3. Akkumulator nach Anspruch 1 oder 2, bei dem die Schaumstruktur eine offene Porosität von 85 bis 97%, vorzugsweise von ca. 95% aufweist.

4. Akkumulator nach einem der Ansprüche 1 bis 3, bei dem der Anteil des Metallschaums am Elektrodenvolumen ca. 5% beträgt.

5. Akkumulator nach einem der Ansprüche 1 bis 4, bei dem die spezifische Volumenkapazität der positiven Elektrode 650 bis 700mAh beträgt.

## Claims

1. Gas-tight sealed alkaline NiCd or NiH accumulator in the form of a button cell having arranged in the cell housing positive and negative electrodes which are separated by a separator, in which the positive electrode has a support/diverter framework which is of a porous metal foam or metal felt, and in which the active material embedded in the support/diverter framework is free of additions of conductive agent.

2. Accumulator according to Claim 1, in which the metal forming the basis for the foam or felt is nickel.

3. Accumulator according to Claim 1 or 2, in which the foam structure exhibits 85 to 97%, preferably approximately 95%, open pore volume.

4. Accumulator according to one of Claims 1 to 3, in which an approximately 5% proportion of the electrode volume is metal foam.

5. Accumulator according to one of Claims 1 to 4, in which the specific volume capacity of the positive electrode is from 650 to 700 mAh.

## Revendications

1. Accumulateur NiCd ou NiH, étanche au gaz, en forme de pile-bouton, comportant dans le boîtier de la cellule, des électrodes positive et négative, séparées par un séparateur, l'électrode positive ayant une ossature de support ou de sortie en une mousse métallique poreuse ou un feutre métallique et la matière active intégrée dans l'ossature de support ou de sortie ne comporte pas d'additifs conducteurs.

2. Accumulateur selon la revendication 1,
dans lequel
le métal à la base de la mousse ou du feutre est du nickel.

3. Accumulateur selon la revendication 1 ou 2,
dans lequel
la structure de mousse a une porosité ouverte de 85 et 97 % de préférence d'environ 95.

4. Accumulateur selon l'une des revendications 1 à 3,
dans lequel
la teneur en mousse métallique par rapport au volume de l'électrode est d'environ 5 %.

5. Accumulateur selon l'une des revendications 1 à 4,
caractérisé en ce que
la capacité volumique caractéristique de l'électrode positive est de l'ordre de 650 à 700 mAh.
